# DEMANDE DE BREVET EUROPEEN

(11) **EP 0 633 709 A1**
(43) Date de publication de la demande: **11.01.1995**
(21) Numéro de dépôt: 94470021.0
(22) Date de dépôt: 05.07.1994
(51) Int. Cl.: H05B 7/06, F27D 1/16, F27B 3/08

(54) **Procédé de conduite d'un four à arc à courant continu à électrode de sole et pièce réfractaire pour sa mise en oeuvre**

(30) Priorité: 09.07.1993 FR 9308650
(71) Demandeur: CLECIM, F-95863 Cergy-Pontoise Cédex (FR); USINOR SACILOR, F-92800 Puteaux (FR)
(72) Inventeur: Blumenfeld, Philippe, F-57310 Bousse (FR); Destannes, Philippe, F-57000 Metz (FR); Lebrun, Christian, F-59990 Saultain (FR)
(74) Mandataire: Ventavoli, Roger

(57) **Abrégé**

Le procédé concerne la conduite d'un four à arc à courant continu doté d'au moins une électrode de sole comportant un barreau (5) métallique d'amenée du courant, traversant la sole (3) du four et entouré par une enveloppe (14) en matériau réfractaire compact comprenant au moins une virole (13) dont l'extrémité supérieure vient au contact du métal en fusion dans le four. Lors des remises en service du four après arrêts, on place sur l'extrémité supérieure (13') de ladite virole, une pièce annulaire autonome sacrificielle (20) en béton réfractaire de forme générale aplatie qui la prolonge vers le haut et destinée à être mise au contact du métal en fusion en lieu et place de ladite virole.

Le procédé s'applique notamment aux fours à arc à courant continu pour la fabrication de l'acier, est vise à réduire l'usure des pièces réfractaires entourant l'électrode de sole.

## Description

La présente invention concerne la conduite d'un four à arc à courant continu pour la fusion des métaux, notamment de l'acier, dont le passage du courant est assuré par au moins une électrode de sole réfroidie traversant le fond du four. Plus particulièrement l'invention a trait aux procédures visant à assurer la longévité de cette électrode de sole.

Il est connu d'utiliser, dans les fours de ce type, une électrode de sole refroidie constituée d'un barreau en métal, généralement en acier, qui traverse le fond du four en affleurant par son extrémité la surface supérieure de la sole du four, afin d'être mis au contact du métal dans le four, et relié par son autre extrémité, débordante sous la cuve, à une source de courant continu.

A son contact, la charge métallique à fondre dans le four est ainsi portée à un potentiel électrique dont l'écart avec le potentiel d'une électrode de voûte en graphite placée au-dessous à distance contrôlée et reliée à la même source de courant est tel qu'un arc électrique s'établit entre la charge à fondre et l'extrémité libre de l'électrode de voûte.

Le barreau dont est formée l'électrode de sole est lié mécaniquement à la cuve du four par un dispositif de fixation qui assure également la connexion électrique entre le barreau et l'alimentation en électricité. Ce dispositif comporte par exemple une chemise en cuivre refroidie par circulation intense d'eau sur sa face externe et qui entoure l'extrémité inférieure du barreau débordante sous la cuve du four, cette chemise étant isolée électriquement de la cuve sur laquelle elle est fixée.

Il est également connu que ce dispositif soit constitué, conjointement avec la chemise précitée (EPA 0178981) ou séparément (UK Pat. app. 2149279), par un embout en cuivre refroidi intérieurement et prolongeant vers le bas le barreau avec lequel il est intimement lié pour assurer une bonne connexion électrique.

La partie du barreau traversant la sole du four est entourée d'une enveloppe en matériau réfractaire compact qui débouche comme le barreau à la surface de la sole et qui est constituée d'une virole ou de plusieurs viroles empilées selon l'épaisseur du revêtement réfractaire du four. Cette enveloppe forme ainsi un puits en matériau réfractaire qui permet de contenir le métal liquéfié résultant de la fusion de la partie supérieure du barreau lors du fonctionnement du four. On parvient ainsi à confiner ce volume d'acier en fusion, qui sinon s'infiltrerait rapidement dans la sole du four. Le niveau du front de fusion (limite entre la partie solide basse et la partie fondue du barreau) varie en fonction de la hauteur de ce puits qui, par usure de la surface supérieure au contact du métal dans le four, a tendance à diminuer simultanément avec l'épaisseur de la sole réfractaire du four, lors d'une campagne de fonctionnement. Ce niveau reste cependant normalement toujours au-dessus de l'extrémité inférieure du puits réfractaire, grâce au maintien thermique que procure le refroidissement de la partie prohéminente basse de l'électrode de sole immédiatement sous l'enveloppe réfractaire. Il en résulte que le métal liquide provenant de la fusion partielle du barreau reste toujours contenu par ce puits réfractaire bouché vers le bas par la portion solide du barreau.

Lors de l'utilisation de tels fours, il se produit une usure inévitable de la sole réfractaire, généralement réalisée en pisé. Une mesure classique pour compenser cette usure est de redéposer sur la sole usée une couche de pisé, opération généralement effectuée lors des arrêts programmés de l'installation.

On a toutefois constaté que la virole réfractaire entourant l'extrémité supérieure du barreau subit une usure plus rapide que le reste de la sole, ce qui aboutit à la formation d'un creux à fort évasement à l'endroit de la sole où débouche l'électrode de sole. De plus cette usure a tendance à croître sans pouvoir être compensée par l'ajout de pisé.

La virole doit donc être remplacée relativement fréquemment, ce qui nécessite un arrêt prolongé du four, et la démolition et la reconstruction de la sole en pisé, au moins aux alentours de l'électrode de sole.

L'invention a pour but de limiter, voire d'éviter l'usure de la virole supérieure, afin de prolonger la durée de vie des viroles et de la sole dans son ensemble, et de réduire les arrêts d'exploitation et les coûts entraînés par une réfection complète de la sole.

Avec ces objectifs en vue, l'invention a pour objet un procédé de conduite d'un four à arc à courant continu dont la sole est traversée par au moins une électrode de sole refroidie comportant un barreau métallique d'amenée du courant entouré dans sa partie traversant la sole par une enveloppe en matériau réfractaire compact débouchant à la surface de la sole et constituée par au moins une virole, procédé caractérisé en ce que, lors des remises en service du four après arrêts, on place une pièce annulaire autonome sacrificielle en matériau réfractaire compact sur l'extrémité supérieure de ladite virole et qui la prolonge vers le haut afin d'être mise au contact du métal en fusion dans le four en lieu et place de ladite virole.

Comme on le comprend, l'invention consiste donc à réaliser l'extrémité supérieure de l'enveloppe réfractaire entourant l'électrode de sole et destinée à être mise au contact du métal en fusion dans le four, sous forme d'un élément réfractaire autonome aisément remplaçable, car simplement posé sur le fond du four. Ainsi, l'invention a également pour objet un tel élément tel que défini dans les revendications ci-après, de même que l'enveloppe réfractaire entière comprenant cet élément.

Grâce à l'invention, on a pu constater une nette diminution de la vitesse d'usure. Cette vitesse qui est de l'ordre de 0,5 mm de réduction d'épaisseur de la sole autour de l'électrode par coulée en moyenne selon l'art antérieur, passe à seulement 0,2 mm par coulée en mettant en oeuvre le procédé selon l'invention.

L'invention sera mieux comprise et d'autres caractéristiques et avantages apparaîtront dans la description qui va en être faite en se reportant aux planches de dessins annexées sur lesquelles :
- la figure 1 est une vue partielle en coupe, selon l'axe de l'électrode de sole dudit four,
- la figure 2 est une vue montrant la pièce annulaire d'usure positionnée sur la virole réfractaire avant remise en service du four.

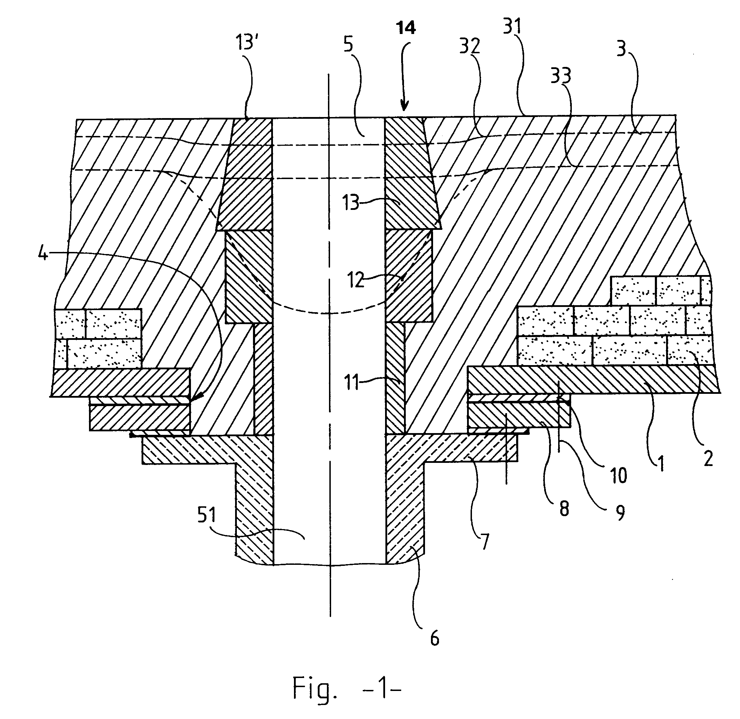

Sur la figure 1, on n'a représenté que la partie du four avoisinant l'électrode de sole. Le four comporte une cuve à carcasse métallique 1 revêtue intérieurement d'un garnissage de briques 2 et de pisé 3 réfractaires formant la sole.

Dans la zone d'implantation de l'électrode de sole, la carcasse 1 porte une bride 8 de renfort, qui lui est solidarisée par des boulons (représentés par leurs axes 9), avec interposition d'une plaque électro-isolante 10. L'ensemble carcasse 1-bride 8 comporte un orifice circulaire 4 dans lequel passe un barreau 5 en acier dont l'extrémité supérieure débouche à la surface 31 de la couche de pisé 3 au fond du four. L'extrémité inférieure 51 du barreau 5 fait prohéminence sur le fond du four et est entourée par une chemise en cuivre refroidie 6 fixée sur la bride 8 par son extrémité supérieure 7. Cette chemise participe également à la connexion électrique du barreau 5 avec la source de courant continu, non représentée. L'ensemble barreau 5-chemise refroidie 6 forme l'essentiel de la constitution de l'électrode de sole.

Au-dessus de la chemise 6, le barreau 5 est entouré par une enveloppe 14 en matériau réfractaire compact (en béton vibré par exemple) s'étendant sur toute l'épaisseur de la sole. L'enveloppe est ici formée par empilage de trois viroles 11, 12 et 13 maintenues en place par le pisé 3 qui les environne. Cette enveloppe 14 forme un puits qui contient le métal liquide résultant de la fusion partielle du barreau 5 lors du fonctionnement du four.

A l'état neuf, ou après réfection complète de la sole avec remplacement du barreau 5 et des viroles réfractaires 11, 12, 13, l'extrémité supérieure 13' de la virole supérieure 13 affleure la surface 31 du pisé 3. Lors de l'utilisation du four, il se produit une usure de la sole 3 et de la partie supérieure de la virole supérieure 13.

On a représenté schématiquement sur la figure 1, par le tracé 32 en traits interrompus, le profil d'usure de la sole au bout de 300 coulées, lors d'une utilisation du four avant mise en oeuvre de l'invention, et par le tracé 33, le profil fortement évasé obtenu dans les mêmes conditions, au bout de 1300 coulées. On peut constater que dès 300 coulées, l'usure de la virole supérieure 13 est plus importante que celle du pisé 3 constituant le reste de la sole. Au bout de 1300 coulées, l'usure, qui est très importante, parvient même à affecter la seconde virole 12, et se traduit par une forme en creux très évasée au niveau des viroles alors que l'usure de la couche de pisé 3 reste sensiblement uniforme.

On notera que, du fait de cette usure, le métal liquide provenant de la fusion de la charge du four et du barreau 5 comble l'évasement ainsi formé, recouvre le bord supérieur des viroles et vient en contact direct avec le pisé 3.

Lorsque le four est vidangé, du métal solidifié reste souvent accroché à la surface de la partie évasée. Il en résulte que le pisé déposé ensuite à cet endroit vient nécessairement recouvrir ces fragments de métal solidifié. Lors de la remise en route ultérieure du four, ces fragments étant à nouveau fondus, le pisé déposé, non lié aux viroles ou au pisé sous-jacent, est rapidement arraché et l'usure des viroles et du pisé avoisinant s'en trouve accrue.

Le procédé conforme à l'invention et qui vise à éliminer, ou au moins à réduire, cette forte usure des viroles réfractaires, est mis en oeuvre de la manière suivante.

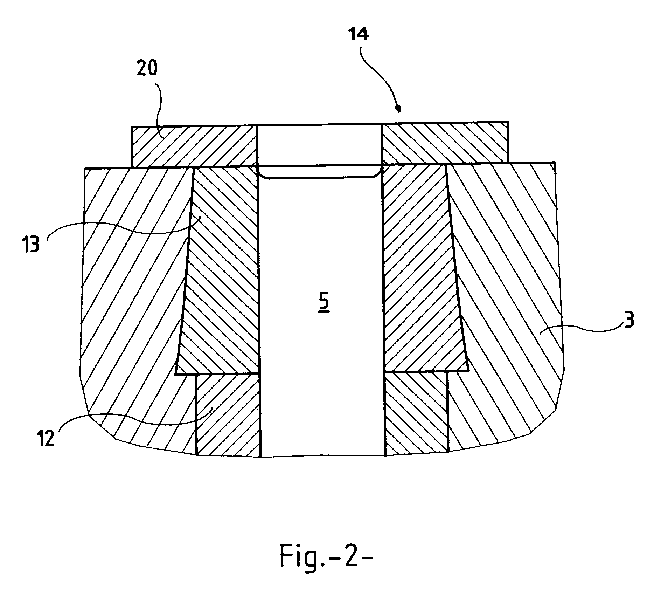

Lors des arrêts programmés du four, en principe en fin de semaine, le four est vidé de sa dernière charge de métal en fusion. On veille à ce que le niveau de métal fondu contenu dans le puits réfractaire formé par l'enveloppe 14 soit situé en dessous du bord supérieur 13' de la partie subsistante de la virole supérieure 13, de manière à éviter au maximum des accrochages de métal sur ce bord supérieur de la virole 13. Avant de remettre le four en service, on place sur cette virole coaxialement à celle-ci et avec le meilleur contact possible entre elles, une pièce annulaire interchangeable 20 en béton réfractaire, comme représentée à la figure 2.

Cette pièce annulaire forme un élément automone prolongeant la virole sous-jacente (leurs diamètres intérieurs étant de préférence sensiblement égaux) et ayant une épaisseur suffisante, d'une part pour assurer sa résistance mécanique, et d'autre part pour limiter le flux thermique qui peut la traverser dans la direction de son épaisseur.

En effet cette pièce annulaire est essentiellement destinée à éviter le choc thermique que subirait en son absence, la partie supérieure de la virole 13. Il a en effet pu être obervé que l'usure importante de la virole supérieure 13 évoquée précédemment, résulte essentiellement d'un écaillage par fissuration horizontale du réfractaire constitutif de la virole. Cette dégradation apparaît due aux chocs thermiques résultant de la brusque mise en contact du bord supérieur de la virole avec l'acier en fusion à haute température provenant des premières quantités de ferrailles fondues lors du redémarrage du four, alors que le matériau réfractaire de la virole située plus bas, ainsi que le barreau métallique 5, sont encore à basse température du fait du refroidissement subit pendant l'arrêt.

La pièce annulaire 20, mise en place conformément à l'invention, empêche le métal fondu d'entrer en contact direct avec le bord supérieur de la virole 13, dès le redémarrage du four. Le choc thermique est supporté par cette pièce annulaire, qui résiste pendant une durée suffisante pour que la virole supérieure 13 ait le temps de s'échauffer par conduction au contact du barreau 5, lequel s'échauffe lui même assez rapidement dès que la fusion de la charge du four a commencé.

Il est à noter que la pièce annulaire 20 n'est pas une "pièce d'usure" dans le sens donné communément à cette expression, mais une pièce sacrificielle de protection destinée à protéger temporairement la virole, au redémarrage du four. En effet, la pièce annulaire 20 n'est pas destinée à compenser l'usure normale de la virole qui se produit inévitablement lors de l'utilisation du four. Cette pièce annulaire, qui assure la protection provisoire de la partie supérieure de la virole, se désagrège d'ailleurs assez rapidement dès la fusion de la première charge du four, du fait que c'est cette pièce qui supporte le choc thermique évoqué précédemment. La destruction de cette pièce n'est d'ailleurs nullement gênante dès lors qu'elle n'est réalisée totalement qu'après la mise en température de fonctionnement normale de la virole : par exemple la durée de cette pièce pourra n'être que de quelques heures.

Ainsi le matériau de la pièce annulaire 20 pourra être un béton réfractaire ordinaire, beaucoup moins coûteux que le matériau constitutif de la virole.

On pourra utiliser soit un béton réfractaire ayant de bonnes caractéristiques d'isolation thermique, auquel cas l'épaisseur de la pièce annulaire pourra être réduite, ou à l'inverse utiliser une pièce plus épaisse réalisée en un béton moins isolant.

Préférentiellement, cette pièce annulaire se présente sous la forme d'une collerette. Son diamètre extérieur est alors sensiblement supérieur à celui de la virole 13 sur laquelle elle est placée, de manière à recouvrir le pisé avoisinant. De cette manière, on évite d'éventuelles infiltrations du métal de la charge liquéfié au début de la fusion, entre la virole et le pisé avoisinant.

On notera aussi que la mise en place de la pièce annulaire en béton sera effectuée à l'arrêt du four avant le redémarrage, dès lors que la durée de l'arrêt a été suffisante pour autoriser un refroidissement sensible de l'enveloppe 14. En effet, il a été constaté que si ladite pièce annulaire n'a pas été mise en place lors d'un redémarrage et même si elle a été à nouveau utilisée lors des démarrages suivants, la virole 13 est susceptible de s'user fortement par la suite. Ceci est dû au fait que, suite à l'omission de la pièce annulaire 20, le bord supérieur de la virole 13 est érodé irrégulièrement, en particulier selon la forme évasée décrite précédemment. En conséquence, lorsque la pièce annulaire 20 est à nouveau utilisée, il subsiste entre celle-ci et la virole sous-jacente 13 des zones où le métal liquide peut s'infiltrer dès le début de la fusion et provoquer à nouveau le choc thermique générateur de l'usure rapide de la virole.

L'invention n'est cependant pas limitée à la mise en place systématique de la pièce annulaire à chaque redémarrage, dans la mesure où les effets du choc thermique ne se produisent pas, ou sont négligeables, si la température de la virole a pu être maintenue suffisamment élevée.

## Revendications

**1)** Procédé de conduite d'un four à arc à courant continu comportant au travers de son fond au moins une électrode de sole comprenant un barreau métallique d'amenée du courant, entouré dans sa partie traversant la sole par une enveloppe en matériau réfractaire compact affleurant la surface de la sole et constituée par au moins une virole (13), caractérisé en ce que, lors des remises en service du four après arrêts, on place une pièce annulaire autonome sacrificielle (20) en réfractaire compact sur l'extrémité supérieure (13') de ladite virole (13) et qui la prolonge vers le haut afin d'être mise au contact du métal en fusion dans le four en lieu et place de ladite virole (13).

**2)** Pièce annulaire autonome (20) en matériau réfractaire compact pour la mise en oeuvre du procédé selon la revendication 1, caractérisée en ce qu'elle est réalisée en un béton réfractaire ordinaire.

**3)** Pièce annulaire autonome (20) en matériau réfractaire compact pour la mise en oeuvre du procédé selon la revendication 1, caractérisée en ce qu'elle est réalisée en un béton réfractaire thermiquement isolant.

**4)** Pièce annulaire autonome (20), caractérisée en ce qu'elle est conformée en collerette à l'extrémité supérieure de la virole (13), son diamètre extérieur étant sensiblement supérieur à celui de ladite virole.

**5)** Enveloppe (14) en matériau réfractaire destinée à entourer une électrode de sole de four à arc à courant continu pour la mise en oeuvre du procédé selon la revendication 1, et comprenant au moins une virole (13), caractérisée en ce qu'elle comporte également une pièce annulaire autonome (20) placée sur l'extrémité supérieure de ladite virole (13).
